# EUROPÄISCHE PATENTSCHRIFT

(11) **EP 4 437 039 B1**
(45) Veröffentlichungstag und Bekanntmachung des Hinweises auf die Patenterteilung: **17.06.2026**
(21) Anmeldenummer: 22821301.3
(22) Anmeldetag: 22.11.2022
(51) Int. Cl.: C08K 3/06, C08K 5/14, C08L 23/16

(54) **FLAMMGESCHÜTZTE ELASTOMERZUSAMMENSETZUNG, VERFAHREN ZUR HERSTELLUNG DERSELBEN UND VERWENDUNG IN BRANDSCHUTZANWENDUNGEN**
FLAME RETARDANT ELASTOMER COMPOSITION, METHOD OF MAKING SAME AND USE IN FIRE PROTECTION APPLICATIONS
COMPOSITION ÉLASTOMÈRE IGNIFUGÉE, SON PROCÉDÉ DE PRÉPARATION ET SON UTILISATION DANS DES APPLICATIONS DE PROTECTION CONTRE L'INCENDIE

(30) Priorität: 24.11.2021 DE 102021130725
(43) Veröffentlichungstag der Anmeldung: 02.10.2024
(73) Patentinhaber: ContiTech Deutschland GmbH, 30175 Hannover (DE)
(72) Erfinder: SCHWEGMANN, Michael, 21079 Hamburg (DE)
(74) Vertreter: Preusser, Andrea
(86) Internationale Anmeldenummer: PCT/DE2022/200273
(87) Internationale Veröffentlichungsnummer: WO 2023/093951

(56) Entgegenhaltungen:
- EP-A1- 3 524 636
- EP-B1- 2 880 093
- CN-A- 109 575 419
- CN-A- 114 044 987
- DE-A1- 102014 010 123

## Beschreibung

Die vorliegende Erfindung betrifft flammgeschützte Elastomerzusammensetzungen, die eine Polymermischung aus einem Doppelbindungen enthaltenden Elastomer und einen Vinylacetat-haltigen thermoplastischen Polymer, ein Vernetzersystem, das einen Schwefel- bzw. schwefelhaltigen Vernetzer und einem peroxdischen Vernetzer umfasst, und mindestens ein Flammschutzmittel enthält, wobei der Schwefel- bzw. schwefelhaltigen Vernetzer gegenüber dem peroxdischen Vernetzer im Vernetzersystem im Überschuss vorliegt. Die vorliegende Erfindung betrifft weiterhin entsprechende vernetzte flammgeschützte Elastomerzusammensetzungen, Formteile aus solchen Elastomerzusammensetzungen und Verfahren zur Herstellung derselben, sowie die Verwendung solcher Formteile in Brandschutzanwendungen.

### Stand der Technik

Elastische Elemente, beispielsweise aus Gummi bzw. Kautschuk, weisen von sich aus keine flammhemmenden bzw. brandhemmenden Eigenschaften auf, wie sie in einigen Einsatzzwecken teilweise auf Grund von Normen bzw. gesetzlichen Bestimmungen gefordert werden. Es ist bekannt, dass Elastomere bzw. Gummi oder Naturkautschuk Flammschutzmittel bzw. brandhemmende Mittel zur Vermittlung von gewünschten flammhemmenden Eigenschaften beigemengt werden können. Solche Zusätze führen allerdings in der Regel zu einer Beeinträchtigung der elastischen Eigenschaften, was oft dazu führt, dass ein derartiges aus Gummi bzw. Kautschuk bestehendes Element geforderte elastischen Eigenschaften im Hinblick auf gewünschte statische und dynamische Eigenschaften nicht bzw. nicht mehr erfüllen kann. Bei einer Verwendung als Federelement oder Dämpfungselement oder einem ähnlichen, üblicherweise hochdynamisch belasteten Element, beispielsweise bei Fahrzeugen, können somit die geforderten brandschutztechnischen Bestimmungen nicht zufriedenstellend erfüllt werden.

Aufgrund dieser Problematik wurde vorgeschlagen, nicht das gesamte Element aus Elastomer mit Brandschutzmittel herzustellen, sondern solche Elemente nur mit einer flammschutzhemmende Beschichtungen zu versehen. Derartige Verbundelemente sind beispielsweise in der DE 38 31 894 A1 oder der WO 2010/069842 beschrieben.

Von wesentlicher Bedeutung für die Eigenschaften eines Elastomers ist das Vernetzungssystem, mit dem der zunächst fließfähige Kautschuk in ein elastomeres Material, das über die typischen elastomeren Eigenschaften verfügt, verwandelt wird. Über die Art der Vernetzung und die Vernetzungsdichte lassen sich Eigenschaften wie die Härte, Modul, Festigkeit, Bruchdehnung, Weiterreißwiderstand und die Elastizität auf das gewünschte Niveau einstellen.

Aus dem Stand der Technik sind darüber hinaus Flammschutzmittel-haltige polymere Zusammensetzungen bekannt, die beispielsweise aus Mischungen von Ethylenvinylacetat und Ethylen-Propylen-Dien-Monomer-Kautschuk gebildet sein können. Diese Mischungen werden zum Teil mit Hilfe von Silanen, meist aber peroxidisch oder durch Bestrahlung vernetzt.

Derartige Mischungen werden vor allem bei der Ummantelung von Kabeln oder elektrischen Leitungen eingesetzt. So sind beispielsweise in der EP 2 343 334 A2 flammgeschützte Zusammensetzungen aus EVA, EPDM und LLDPE beschrieben, die mit einem peroxidischen Vernetzungssystem auf Basis von Di-Cumylperoxid vernetzt werden. Peroxide werden oft als Vernetzungsmittel eingesetzt, wenn Kautschuke vernetzt werden sollen, die keine Doppelbindungen enthalten und/oder wenn eine besonders hohe Vernetzungsdichte und Engmaschigkeit des Netzwerkes erreicht werden soll, die wiederum die mechanischen Kennwerte wie den Druckverformungsrest, insbesondere bei erhöhten Temperaturen, positiv beeinflusst. Die meist hohe Vernetzungsdichte und die kurzen Vernetzungsbrücken haben auf der anderen Seite eine geringere Reißdehnung im Vergleich zu Materialien gleicher Härte zur Folge. Werden die Oberflächen der Produkte nicht mehr bearbeitet, erfordert die Peroxidvernetzung beim Vernetzungsvorgang den Ausschluss von Luftsauerstoff. Zudem wirken sich peroxidische Vernetzungssysteme nachteilig auf die elastischen und dynamischen Eigenschaften aus, insbesondere dann, wenn die Zusammensetzung zusätzlich große Mengen an Flammschutzmittel enthält. Schließlich haben periodische Vernetzter auch den Nachteil, dass sie vergleichsweise teuer sind, insbesondere, im Vergleich zu Schwefel als Vernetzungsmittel.

Zur Lösung dieser Probleme schlägt die EP 2 880 093 Mischungen von Doppelbindungen enthaltenden Elastomeren, wie EPDM, und Vinylacetat-haltigen thermoplastischen Polymer, wie EVA, vor, die ausschließlich mit einem Schwefel- oder schwefelhaltigen Vernetzungssystem vulkanisiert werden. Durch den Schwefelvernetzer soll dabei sichergestellt werden, dass nur das Doppelbindungen enthaltende Elastomer an der Vernetzung teilnimmt und ein Material mit hoher Reißdehnung erhalten wird.

Nachteilig an einer ausschließlichen Vernetzung mit Schwefel ist auf der anderen Seite ein relativ ungünstiger Druckverformungsrest und eine erhöhte Alterung bei höheren Gebrauchstemperaturen (z.B. >120°C). CN 109 575 419 A betrifft eine hochreißfeste und halogenfreie, flammhemmende, ölbeständige Tieftemperatur-Kautschukmischung, in der eine Kombination aus peroxidischem Vernetzer und Schwefel- bzw. schwefelhaltigem Vernetzer verwendet wird. Jedoch wird der peroxidische Vernetzer im Überschuss verwendet.

Vor diesem Hintergrund bestand ein Bedarf für elastomere Mischungen bei denen einerseits ein verbesserter Druckverformungsrest erhalten wird aber anderseits immer noch die mit Schwefel erreichbaren günstigen elastischen und dynamischen Eigenschaften eingestellt werden können, insbesondere, wenn die Elastomerzusammensetzungen einen hohen Anteil an Flammschutzmittel enthält. Die vorliegende Erfindung befasst sich mit diesem Bedarf.

### Detaillierte Beschreibung

In den der vorliegenden Anmeldung zugrundeliegenden Untersuchungen wurde überraschend gefunden, dass verbesserte Eigenschaften in Bezug auf die Druckverformung und vorteilhafte elastische und mechanische Eigenschaften erhalten werden können, wenn eine Zusammensetzung, die ein Doppelbindungen enthaltendes Elastomer und ein Vinylacetat-haltiges thermoplastisches Polymer enthält, mit einer Mischung aus einem peroxidischen und einem Schwefel- bzw. schwefelhaltigen Vernetzer vernetzt wird. Dabei ist eine geringe Menge an peroxidischem Vernetzer zur Realisierung eines deutlich verbesserten Druckverformungsrests ausreichend, so dass der peroxidische Vernetzer im Unterschuss zu dem Schwefel- bzw. schwefelhaltigen Vernetzer eingesetzt werden kann. Weiterhin überraschend wurde beobachtet, dass sich mit einem entsprechenden Vernetzungssystem auch eine verminderte Glasübergangstemperatur des vernetzten Produkts realisieren lässt, was eine Verbreiterung des Temperaturfensters, in dem die Zusammensetzung mit elastomeren Eigenschaften verwendet werden kann, zur Folge hat.

Gemäß einem ersten Aspekt betrifft die vorliegende Erfindung demzufolge eine flammgeschützte Elastomerzusammensetzung, wie in Anspruch 1 definiert, die eine Polymermischung mit i) einem Doppelbindungen enthaltenden Elastomer, und ii) einem Vinylacetat-haltigen thermoplastischen Polymer, als polymere Komponenten, wobei die polymeren Komponenten als homogene Polymermischung vorliegen, ein Vernetzersystem aus einem Schwefel- bzw. schwefelhaltigen Vernetzer und einem peroxdischen Vernetzer, wobei der Mengenanteil des peroxidischen Vernetzers geringer ist als der des Schwefel- bzw. schwefelhaltigen Vernetzer, und zumindest ein Flammschutzmittel oder eine Kombination von Flammschutzmitteln enthält.

Die Verwendung vom peroxidischen Vernetzer in nur geringem Anteil ist auch mit dem Vorteil verbunden, dass die Kosten des Vernetzersystems minimiert werden können.

Bei dem Doppelbindungen-enthaltenden Elastomer handelt es sich bevorzugt um ein Homopolymer, Copolymer oder ein Terpolymer aus bzw. mit Dien-Monomereinheiten. Besonders geeignet ist ein Terpolymer bestehend aus Ethylen, Propylen und einem dienhaltigen Termonomer, vorzugsweise mit einem Termonomer-Anteil von mindestens 2 Gew.-% bis 12 Gew.-% bezogen auf das Terpolymer.

Besonders vorteilhaft ist es, wenn das Doppelbindungen enthaltende Elastomer ein Kautschuk mit einer ungesättigten Seitengruppe, insbesondere ein Ethylen-Propylen-Dien-Monomer-Kautschuk (EPDM) ist. Ethylen-Propylen-Dien-Monomer-Kautschuke (EPDM) weisen im Brandfall große Vorteile bezüglich ihrer geringen Rauchgasdichte und Toxizität auf, sind selbst aber nicht brandbeständig. EPDM-Kautschuke sind auf der anderen Seite aber mit Füllstoffen und Weichmachern hoch füllbar und können so einen hohen Anteil an Flammschutzmitteln in fester und flüssiger Form aufzunehmen. Die Härte und die mechanischen Kennwerte von EPDM-Kautschuken können so in einem breiten Bereich eingestellt werden und die Kautschuke haben Vorteile hinsichtlich der Witterungs-, UV-, Ozon- und Hitzebeständigkeit.

Besonders zweckmäßig in der flammgeschützte Elastomerzusammensetzung der Erfindung zu verwendende EPDM-Kautschuke enthalten nicht-konjugierte Dien-Monomereinheiten, die aus der Gruppe umfassend 1,3-Butadien, 2-Methyl-1,3-butadien (Isopren), 2,3-Dimethyl-1,3-butadien, 1,3-Pentadien, 1,3-Cyclopentadien, Dicyclopentadien, 2-Methyl-1,3-pentadien, 1,3-Hexadien, 1,4-Hexadien, 1,4-Cyclohexadien, Tetrahydroinden, Methyltetrahydroinden, Ethylidennorbornen bzw. 5-Ethyliden-2-norbornen (ENB), 5-Methylen-2-norbornen (MNB), 1,6 Octadien, 5-Methyl-1,4-hexadien, 3,7-Dimethyl-1,6-octadien, 5-iso-Propyliden-2-norbornen und 5-Vinyl-norbornen ausgewählt sind. Ganz besonders vorteilhaft ist es, wenn der Ethylen-Propylen-Dien-Monomer-Kautschuk (EPDM) ein Terpolymer aus Ethylen, Propylen und 5-Ethyliden-2-norbornen (ENB) oder Dicyclopentadien (DCPD) ist, vorzugsweise mit einem Termonomer-Anteil von mindestens 2 bis 12 Gew.-% und insbesondere 4 bis 12 Gew.-% bezogen auf das Terpolymer (gemäß ASTM D 6047). Meist bevorzugt als Dienbestandteil des EPDM-Kautschuks ist 5-Ethyliden-2-norbornen (ENB).

In den der vorliegenden Erfindung zugrundeliegenden Untersuchungen wurde auch gefunden, dass sich ganz besonders günstige Eigenschaften erzielen lassen, wenn das EPDM aus einer Mischung von zwei EPDM-Typen gebildet ist, von denen eines einen Diengehalt im Bereich von 8 bis 12 Gew.-% und das andere einen Diengehalt im Bereich von 4 bis 7 Gew.-% aufweist. Zusätzlich können in diesem Fall auch noch weitere EPDM-Typen enthalten sein die dann vorzugsweise jedoch in einer Menge von maximal 5 Gew.-% und insbesondere maximal 2 Gew.-% bezogen auf die Gesamtmenge an EPDM mit hohem und niedrigem Diengehalt in der Mischung enthalten sind. Bei einer Mischung macht das EPDM mit einem Diengehalt im Bereich von 8 bis 12 Gew.-% vorzugweise den überwiegenden Anteil des EPDMs aus (d.h. 50 bis 95 Gew.-% und vorzugsweise 60 bis 80 Gew.-% des gesamten EPDM in der Mischung).

Bei dem in die erfindungsgemäße Elastomerzusammensetzung einzubeziehenden thermoplastischen Vinylacetat-haltigen Polymer handelt es sich bevorzugt um ein Homopolymer, Copolymer oder Terpolymer des Vinylacetats und besonders bevorzugt um Polyvinylacetat (PVAc) oder Ethylenvinylacetat (EVA). Für ein Ethylenvinylacetat-Copolymer ist es bevorzugt, wenn es einen Vinylacetatgehalt im Bereich von 40 bis 75 Gew.-% und insbesondere im Bereich von 50 bis 65 Gew.-% aufweist.

Alternativ oder zusätzlich dazu ist es bevorzugt, wenn das Vinylacetat-haltige Polymer eine Schmelztemperatur bzw. einen Beginn des Schmelzbereichs von weniger als 150 °C, vorzugsweise weniger als 100 °C, aufweist.

Das Verhältnis der polymeren Komponenten i) und ii) in der erfindungsgemäßen Elastomerzusammensetzung liegt vorzugsweise im Bereich von 5:1 bis 20:1 und insbesondere 6:1 bis 12:1, d.h. das Doppelbindungen enthaltende Elastomer liegt gegenüber dem Vinylacetat-haltigen thermoplastischen Polymer im Überschuss vor.

Als peroxidische Vernetzer im Vernetzungssystem der vorliegenden Erfindung kommen alle dem Fachmann bekannten peroxidischen Vernetzer in Betracht. Besonders zweckmäßig verwendbar sind Dialkylperoxide und Ketalperoxide. Geeignete Dialkylperoxide sind beispielsweise Dicumylperoxid, Di-t-butylperoxid, t-Butyl-cumylperoxid, 2,5-Dimethyl-2,5-bis(t-butylperoxy)-hexan, 2,5-Dimethyl-2, 5-bis(t-butylperoxy)-hexin-(3), alpha,alpha'-Bis(t-butylperoxy)-diisopropylbenzol, Di-t-amyl-peroxid, 1,3,5-Tris(2-t-butylperoxy-isopropyl)benzol, 1-Phenyl-1-t-butylperoxy-phthalid. Geeignete Ketalperoxide sind unter anderem 1,1-Bis(t-butylperoxy)-3,3,5-trimethyl-cyclohexan, 1,1-Bis(t-butylperoxy)-cyclohexan, 2,2'-Bis(t-butylperoxy)-butan, Ethyl-3,3-bis(t-butylperoxy)-butyrat, n-Butyl-4,4-bis(t-butylperoxy)-valerat. Besonders bevorzugt ist im Kontext der vorliegenden Erfindung die Verwendung von 2,5-Dimethyl-2,5-bis(t-butylperoxy)-hexan.

Der Anteil des peroxidischen Vernetzers, bezogen auf die Polymermischung, beträgt 0,2 bis 1,5 phr und vorzugsweises 0,5 bis 1,2 phr, wobei sich "phr" auf die Gesamtmenge an Doppelbindungen enthaltendem Elastomer und Vinylacetat-haltigen thermoplastischen Polymer, die in der Polymermischung enthalten sind, bezieht.

Als Schwefelvernetzer kann in den erfindungsgemäßen Elastomerzusammensetzungen Schwefel (z.B. in Form von Mahlschwefel), oder ein schwefelhaltiger Vernetzer wie Bis[3-(triethoxysilyl)propyl]polysulfid oder ein Gemisch davon verwendet werden.

Der Anteil des Schwefel- bzw. schwefelhaltigen Vernetzers, bezogen auf die Polymermischung, liegt im Bereich von von 1 bis 7 phr, insbesondere 2 bis 5 phr und besonders bevorzugt 2,8 bis 4,0 phr. Für den Zweck der vorliegenden Erfindung ist es wesentlich, dass der Schwefel- bzw. schwefelhaltige Vernetzer gegenüber dem peroxidischen Vernetzer im Überschuss vorliegt, wobei ein Überschuss einen höheren Gewichtsanteil der Gesamtmenge des Schwefel- bzw. schwefelhaltigen Vernetzers gegenüber dem peroxidischen Vernetzer bezeichnet. Vorzugsweise liegen peroxidischer Vernetzer und Schwefel- bzw. schwefelhaltiger Vernetzer in einem Verhältnis von etwa 1:1,5 bis 1:5, insbesondere 1:2 bis 1:4 und besonders bevorzugt 1:2,5 bis 1:3,8 vor.

Zur Erreichung guter Brandschutzeigenschaften unter möglichst geringer Beeinflussung der Materialeigenschaften hat es sich als vorteilhaft erwiesen, wenn Magnesiumhydroxid (MDH), Aluminiumhydroxid (ATH), Antimontrioxid, Nanoclays und/oder Zinkborat, vorzugsweise eine synergistisch wirkende Mischung aus zwei oder mehreren davon, in die erfindungsgemäße Elastomerzusammensetzung einbezogen werden. Bevorzugte enthält die erfindungsgemäße Elastomerzusammensetzung Aluminiumhydroxid, entweder allein oder in Mischung mit anderen Flammschutzmitteln. Insbesondere ist/sind das/die Flammschutzmittel dabei fest und pulverförmig oder kristallin.

Das Flammschutzmittel ist in den meisten Fällen in einem vergleichsweise großen Anteil in der Elastomerzusammensetzung enthalten. Die Elastomerzusammensetzung enthält einen Anteil von 100 bis 300 phr, und insbesondere 140 bis 250 phr Flammschutzmittel. Bei einer Unterschreitung kann in Einzelfällen eine ausreichende flammhemmende Wirkung nicht mehr gewährleistet sein, während sich ein höherer Anteil an Flammschutzmittel deutlich ungünstig auf die mechanischen Eigenschaften, wie z.B. Zugfestigkeit, Reißdehnung, Weiterreißwiderstand, oder Elastizität auswirken kann.

Neben den im Vorstehenden erwähnten Bestandteilen kann die erfindungsgemäße Elastomerzusammensetzung weitere Additive und/oder Hilfsstoffe enthalten, um die Endeigenschaften eines daraus hergestellten Produkts wünschenswert zu steuern.

Eine wichtige Klasse solcher Additive, die zur Steuerung der Vulkanisation oder Vernetzung eingesetzt werden können, sind Beschleuniger, die jeweils spezifisch die Schwefel-Vernetzung oder Peroxidvernetzung beschleunigen können. Häufig eingesetzte Beschleuniger für die Schwefelvernetzung sind beispielsweise Sulfenamide, z.B. N-Cyclohexyl-2-benzothiazylsulfenamid (CBS), Thiazole, z.B. 2-Mercaptobenzothiazol (MBT), Dithiocarbamate, z.B. Zinkdibenzyldithiocarbamat (ZBEC) oder Zinkdibutyldithiocarbamat (ZDBC), Guanidine, z.B. Diphenylguanidin (DPG) oder Thiophosphate. Geeignete Schwefelspender, die zur Steuerung der Schwefelvernetzung zugesetzt werden können, sind beispielsweise Thiurame wie Tetramethythiuramdisulphid (TMDT) oder Tetramethythiurammonsulphid (TMTM), Caprolactamdisulfid oder Phosphorylpolysulfid. Derartige Beschleuniger und Schwefelspender können zweckmäßig mit einem Gesamtanteil von 1 bis 5 phr in die erfindungsgemäße Elastomerzusammensetzung einbezogen werden.

Zur Unterstützung der Peroxidvernetzung können Antioxidantien eingesetzt werden wie beispielsweise 2,2,4-Trimethyl-1,2-dihydrochinolin (TMQ) oder 1,3-Dihydro-4(oder 5)-methyl-2H-benzimidazol-2-thion. Derartige Antioxidantien und Schwefelspender können mit einem Gesamtanteil von 1 bis 5 phr in der erfindungsgemäße Elastomerzusammensetzung enthalten sein.

Darüber hinaus können die erfindungsgemäßen Elastomerzusammensetzungen Weichmacher, z.B. in Form von paraffinischen Mineralölen, oder Verarbeitungshilfsmittel, z.B. in Form von Ca- und Zn-Seifen von Fettsäuren, Fettalkoholen oder niedermolekularem Polyethylen oder Polyethylenglykol enthalten. Weiterhin können zur Verbesserung der Hitzestabilität Additive wie ZnO oder MgO zugesetzt werden, und/oder es können Pigmente zur Färbung oder Vermittlung von UV-Schutz, wie TiO₂, UV-Stabilisatoren oder Ruß zugesetzt werden. Der Anteil an Weichmachern bewegt sich dabei vorzugsweise im Bereich von 5 bis 50 phr, insbesondere 10 bis 30 phr und weiterbevorzugt 12 bis 25 phr. Weitere Hilfsstoffe und Additive sind zweckmäßig mit einem maximalen Anteil von 20 phr und insbesondere 15 phr in der flammgeschützten Elastomerzusammensetzung enthalten.

Als im Kontext der vorliegenden Erfindung besonders geeignete flammgeschützte Elastomerzusammensetzung kann eine Zusammensetzung wie folgt angegeben werden:
- Gemisch aus Doppelbindungen enthaltendem Elastomer und Vinylacetathaltigem thermoplastischen Polymer;
- 130 bis 250 phr Flammschutzmittel, bevorzugt in Form von Aluminiumhydroxid;
- 10 bis 30 phr Weichmacher;
- jeweils 1 bis 5 phr Schwefelspender/Beschleuniger der Schwefelvulkanisation und Antioxidantien;
- 5 bis 30 phr, und bevorzugt 8 bis 15 phr an weiteren additiven und Hilfsstoffen.

Für einen Einsatz zu Brandschutzzwecken ist es bevorzugt, wenn die erfindungsgemäße flammgeschützte Elastomerzusammensetzung keine relevanten Mengen an Halogenen enthält, da aus halogenhaltigen Verbindungen im Brandfall toxische Halogenwasserstoffe freigesetzt werden können. Für die erfindungsgemäße Elastomerzusammensetzung ist es daher bevorzugt, dass die polymeren Komponenten der Elastomerzusammensetzung, und bevorzugt die gesamte Zusammensetzung, halogenfrei sind/ist.

In einem weiteren Aspekt betrifft die vorliegende Erfindung eine flammgeschützte Elastomerzusammensetzung, die hergestellt bzw. erhältlich ist durch
a) Mischen der vorstehend angegebenen polymeren Komponenten zu einem homogenen Gemisch und, insbesondere nachfolgender, Einarbeitung des Vernetzungssystems, der Flammschutzmittel und gegebenenfalls weiterer Additive und/oder Hilfsstoffe unter Vermeidung einer Vernetzung und/oder Vulkanisation, und
b) und anschließende Vulkanisation.

Das Mischen erfolgt zweckmäßig unter Bedingungen, bei denen keine Vernetzung bzw. Vulkanisation auftritt, d.h. vorzugsweise bei einer Temperatur von maximal 110 °C. Die anschließende Vulkanisation kann bei erhöhter Temperatur, z.B. im Bereich von 130°C bis 200°C und insbesondere 130°C bis 170°C, und gegebenenfalls unter Druck durchgeführt werden. Bei der Vulkanisation kommt es zu einer Vernetzung der Polymerbestandteile in Folge der Aktivierung der Vernetzer.

Die erfindungsgemäße Elastomerzusammensetzung weist nach der Vulkanisation bevorzugt mindestens eine der folgenden Eigenschaften auf:
i) einen Durchverformungsrest, bestimmt gemäß DIN ISO 815 bei 70°C/22 h, im Bereich von 10 bis 40 % und bevorzugt 15 bis 25% und/oder einen Durchverformungsrest, bestimmt gemäß DIN ISO 815 bei 100°C/22 h, im Bereich von 45 bis 75 % und bevorzugt 55 bis 68%;
ii) eine Shore A Härte, bestimmt gemäß DIN ISO 7619-1 (2012) von 65 bis 85, vorzugsweise 70 bis 83;
iii) eine Reißdehnung, bestimmt gemäß DIN 53504, von 200 bis 600%, vorzugsweise von 300 bis 500%;
iv) einen Weiterreißwiderstand, bestimmt gemäß DIN ISO 34-1 A, von > 2,5 N/mm, vorzugsweise > 3,5 N/mm.

Darüber hinaus ist es bevorzugt, wenn die Flammgeschützte Elastomerzusammensetzung nach der Vulkanisation eine Glasübergangstemperatur, bestimmt mittels DSC, von höchstens -40°C, und insbesondere von höchstens -41 °C aufweist.

Ein noch weiterer Aspekt der vorliegenden Erfindung betrifft ein Verfahren zur Herstellung eines Formkörpers, dass die folgenden Schritte umfasst:
- Bereitstellen eines einer wie vorstehend beschriebenen Elastomerzusammensetzung,
- Einbringen der Elastomerzusammensetzung in eine Form,
- Vulkanisieren der Elastomerzusammensetzung bei erhöhter Temperatur, vorzugsweise bei einer Temperatur im Bereich von 130°C bis 200 °C, und
- Entformen des so gebildeten Formkörpers.

Das Vulkanisieren erfolgt insbesondere bevorzugt bei einer Temperatur im Bereich von 130°C bis 190°C.

Ein noch weiterer Aspekt der vorliegenden Erfindung betrifft einen Formkörper, der nach dem vorstehend beschrieben Verfahren erhältlich ist. Der Formkörper kann ausschließlich aus der flammgeschützten Elastomermischung gebildet sein, oder weitere Bestandteile, z.B. Verstärkungsmittel, umfassen. In einer Ausführungsform ist die Oberfläche des Formkörpers ausschließlich aus der flammgeschützten Elastomermischung gebildet, während ein anderes Material im inneren des Formkörpers vorliegt.

Ein noch weiterer Aspekt der vorliegenden Erfindung betrifft die Verwendung einer wie vorstehend beschrieben flammgeschützte Elastomerzusammensetzung oder eines Formkörpers als Federelement, Dämpfungselement, Dichtung, Schlauch, Matte, Formteil, Schutzbekleidung, Kabelummantelung oder Kabeltülle, Elastomerprofil, insbesondere für Fenster, etc. oder als Bestandteil hiervon.

In diesem Zusammenhang sei angemerkt, dass Verwendungen einer wie vorstehend beschriebenen flammgeschützten Elastomerzusammensetzung, die im Kontext mit baulichem Brandschutz stehen, und Formteile für den baulichen Brandschutz, sofern sie aus der beschriebenen flammgeschützten Zusammensetzung bestehen oder diese enthalten, nicht vom Schutzumfang dieser Anmeldung erfasst sind. Die Angabe "Formteil für den baulichen Brandschutz" bezeichnet hierbei Formteile, die in Applikationen eingesetzt werden, in denen das Überspringen eines Brandes oder von Gasen, wie Brandgasen, von einem Raum in einen angrenzenden weiteren Raum oder von unterschiedlichen Gebäudebereichen in daran anschließende Bereiche unterbunden oder zumindest verlangsamt werden soll. Derartige Formteile sind in der Regel so ausgestaltet, dass sie in Öffnungen einer Wand zwischen den Räumen oder Gebäudebereichen eingesetzt werden können.

Die Angabe "Gebäudebereiche" erfasst in diesem Kontext Bereiche von stationär unbeweglichen Konstruktionen ("Gebäuden") einschließlich technischer und industrieller Anlagen im On- und Offshorebereich, Windkraft- und Solaranlagen und auch von beweglichen Konstruktionen, wie insbesondere Schiffen, die zum Zwecke des Brandschutzes voneinander zur Unterbindung von Gasaustausch zu trennende Bereiche oder Einheiten aufweisen. In solchen Anwendungen weisen Formteile in aller Regel ein Aspektverhältnis (= Verhältnis der größten zur kleinsten räumlichen Ausdehnung des Formteils) von höchstens 10 auf.

Brandschutzanwendungen, die nicht im Kontext mit baulichem Brandschutz stehen, sind hingegen solche, in denen ein Brennen des Materials selbst vermieden werden soll, aber das Überspringen eines Brandes oder von Gasen, wie Brandgasen, von einem Raum in einen angrenzenden weiteren Raum durch das brandgeschützte Formteil nicht direkt beeinflusst wird.

Für diese Aspekte gelten die bevorzugten Ausführungsformen, die im Zusammenhang mit der flammgeschützten Elastomerzusammensetzung erläutert wurden, analog als bevorzugt, es sei denn, es ergibt sich dadurch ein Widerspruch.

Im Folgenden wird die vorliegende Anmeldung anhand einiger Ausführungsbeispiele näher illustriert, die jedoch nicht in irgendeiner Weise als einschränkend für den Schutzumfang der Anmeldung anzusehen sind.

### Beispiele

Die in der folgenden Tabelle 1 angegebenen Zusammensetzung wurde in einem Mischer homogenisiert und anschließend bei einer Temperatur von 180°C für 10 Min (2 mm dicke Platten) bzw. 20 Min (6 mm dicke Platten) vulkanisiert. Die für die so hergestellten Platten bestimmten mechanischen Eigenschaften und deren Zusammensetzung sind ebenfalls in der folgenden Tabelle 1 angegeben.

**Tabelle 1**

| **Komponente** | **E1** | **V1** |
|---|---|---|
| EPDM mit Diengehalt von etwa 11% | 74 | 74 |
| EPDM mit Diengehalt von etwa 5% | 16 | 16 |
| EVM mit etwa 60% Vinylacetat | 10 | 10 |
| Aluminiumhydroxid | 180 phr | 180 phr |
| Schwefelvernetzer | 3,4 phr | 3,4 phr |
| Peroxidvernetzer | 1 phr | - |
| Mineralöl (Weichmacher) | 15 phr | 15 phr |
| Antioxidationsmittel | 2,4 phr | 2,4 phr |
| Beschleuniger/ Schwefelspender | 2,8 phr | 2,8 phr |
| ZnO | 3,8 phr | 3,8 phr |
| | | |
| Druckverformungsrest 22h 70°C¹ | 21 % | 43 % |
| Druckverformungsrest 22h 100°C¹ | 61 % | 75 % |
| Glasübergangstemperatur* [°C]² | -41,4 | -38,8 |
| Reißdehnung [%]³ | 430 % | 360 % |
| Reißfestigkeit [MPa]³ | 4,9 | 4,6 |
| Weiterreißwiderstand [N/mm]⁴ | 3,5 | 4,5 |

| | | |
|---|---|---|
| * Mittelwert aus 2 Messungen (in N2); 1: bestimmt gemäß DIN ISO 815; 2: bestimmt gemäß DSC durch equilibrieren der Probe für 15 Min bei -120°C und anschließendes erhitzen mit einer Heizrate von 10 K/min auf 250°C. Die Glastemperatur wird als Mittelpunkts-Tg gemäß DIN 51007 anngegeben; 3: bestimmt gemäß DIN 53504; 4: bestimmt gemäß DIN ISO 34-1 A. | | |

Aus Tabelle 1 wird deutlich, dass bei einer kombinierten Vernetzung mit Schwefel und Peroxidbeschleuniger trotz anderweitig vergleichbarer mechanischer Eigenschaften eine Absenkung der Glasübergangstemperatur von etwa 2,6 °C beobachtet werden konnte. Diese Änderung erlaubt eine Verwendung entsprechender Elastomerrezepturen für Anwendungen mit sehr niedriger Extremtemperatur. Darüber hinaus wird aus Tabelle 1 deutlich, dass der Druckverformungsrest der mit Schwefel und Peroxid vernetzten Zusammensetzungen besser ist als bei den nur mit Schwefel vernetzten Zusammensetzungen.

## Patentansprüche

1. Flammgeschützte Elastomerzusammensetzung enthaltend
- ein Doppelbindungen enthaltendes Elastomer, und
- ein Vinylacetat-haltiges thermoplastisches Polymer,
als polymere Komponenten, wobei die polymeren Komponenten als homogene Polymermischung vorliegen,
- ein Vernetzersystem aus einem Schwefel- bzw. schwefelhaltigen Vernetzer und einem peroxidischen Vernetzer, wobei der Mengenanteil des peroxidischen Vernetzers geringer ist als der des Schwefel- bzw. schwefelhaltigen Vernetzer, der peroxidische Vernetzer mit einem Anteil von 0,2 bis 1,5 phr und der Schwefel- bzw. schwefelhaltige Vernetzer mit einem Anteil von 1 bis 7 phr in der Polymermischung enthalten ist, und
- zumindest ein Flammschutzmittel oder eine Kombination von Flammschutzmitteln, wobei das Flammschutzmittel mit einem Anteil von 100 bis 300 phr in der Elastomerzusammensetzung enthalten ist.

2. Flammgeschützte Elastomerzusammensetzung nach Anspruch 1, **dadurch gekennzeichnet, dass** der peroxidische Vernetzer mit einem Anteil von 0,5 bis 1,2 phr in der Polymermischung enthalten ist.

3. Flammgeschützte Elastomerzusammensetzung nach Anspruch 1 oder 2, **dadurch gekennzeichnet, dass** der Schwefel- bzw. schwefelhaltige Vernetzer mit einem Anteil von 2 bis 5 phr und bevorzugt 2,8 bis 4,0 phr in der Polymermischung enthalten ist.

4. Flammgeschützte Elastomerzusammensetzung nach mindestens einem der Ansprüche 1 bis 3, **dadurch gekennzeichnet, dass** das Doppelbindungen enthaltende Elastomer ein Homopolymer, Copolymer oder ein Terpolymer aus bzw. mit Dien-Monomereinheiten ist, insbesondere ein Terpolymer bestehend aus Ethylen, Propylen und einem dienhaltigen Termonomer, vorzugsweise mit einem Termonomer-Anteil von mindestens 2 Gew.-% bis 12 Gew.-% bezogen auf das Terpolymer.

5. Flammgeschützte Elastomerzusammensetzung nach mindestens einem der vorangehenden Ansprüche, **dadurch gekennzeichnet, dass** das Doppelbindungen enthaltende Elastomer ein Kautschuk mit einer ungesättigten Seitengruppe, insbesondere ein Ethylen-Propylen-Dien-Kautschuk (EPDM) ist, der vorzugsweise nicht-konjugierte, Dien-Monomereinheiten aufweist, ausgewählt aus der Gruppe von 1,3-Butadien, 2-Methyl-1,3-butadien (Isopren), 2,3-Dimethyl-1,3-butadien, 1,3-Pentadien, 1,3-Cyclopentadien, Dicyclopentadien, 2-Methyl-1,3-pentadien, 1,3-Hexadien, 1,4-Hexadien, 1,4-Cyclohexadien, Tetrahydroinden, Methyl Tetrahydroinden, Ethylidennorbornen bzw. 5-Ethyliden-2-norbornen (ENB), 5-Methylen-2-norbornen (MNB), 1,6 Octadien, 5-Methyl-1,4-hexadien, 3,7-dimethyl-1,6-octadien, 5-iso-Propyliden-2-norbornen, 5-Vinyl-2-norbornen (VNB), wobei der Ethylen-Propylen-Dien-Kautschuk (EPDM) vorzugsweise ein Terpolymer aus Ethylen, Propylen und 5-Ethyliden-2-norbornen (ENB) oder Dicyclopentadien (DCPD) ist.

6. Flammgeschützte Elastomerzusammensetzung nach mindestens einem der vorangehenden Ansprüche, **dadurch gekennzeichnet, dass** das Vinylacetat-haltige Polymer ein Homopolymer, Copolymer oder Terpolymer des Vinylacetats ist und insbesondere ausgewählt ist aus der Gruppe von Polyvinylacetat (PVAc) oder Ethylenvinylacetat (EVA), und/oder dass das Vinylacetat-haltige Polymer eine Schmelztemperatur bzw. einen Beginn des Schmelzbereichs von weniger als 150 °C, vorzugsweise weniger als 100 °C, aufweist, und/oder dass das Vinylacetat-haltige Polymer einen Vinylacetat-Anteil von 40 bis 75 Gew.-%, aufweist.

7. Flammgeschützte Elastomerzusammensetzung nach mindestens einem der vorangehenden Ansprüche, **dadurch gekennzeichnet, dass** die polymeren Komponenten Doppelbindungen enthaltendes Elastomer: Vinylacetat-haltiges thermoplastisches Polymer in einem Verhältnis von 5:1 bis 20:1 und insbesondere 6:1 bis 12:1 in der Elastomerzusammensetzung enthalten sind.

8. Flammgeschützte Elastomerzusammensetzung nach mindestens einem der vorangehenden Ansprüche, **dadurch gekennzeichnet, dass** der peroxidische Vernetzer in Form von Dialkylperoxiden, insbesondere ausgewählt aus der Gruppe umfassend Dicumylperoxid, Di-t-butylperoxid, t-Butyl-cumylperoxid, 2,5-Dimethyl-2,5-bis(t-butylperoxy)-hexan, 2,5-Dimethyl-2, 5-bis(t-butylperoxy)-hexin-(3), alpha,alpha'-Bis(t-butylperoxy)-diisopropylbenzol, Di-t-amyl-peroxid, 1,3,5-Tris(2-t-butylperoxy-isopropyl)benzol, 1-Phenyl-1-t-butylperoxy-phthalid, und/oder Ketalperoxiden, insbesondere ausgewählt aus der Gruppe umfassen 1,1-Bis(t-butylperoxy)-3,3,5-trimethyl-cyclohexan, 1,1-Bis(t-butylperoxy)-cyclohexan, 2,2'-Bis(t-butylperoxy)-butan, Ethyl-3,3-bis(t-butylperoxy)-butyrat, n-Butyl-4,4-bis(t-butylperoxy)-valerat, in der Zusammensetzung vorliegt.

9. Flammgeschützte Elastomerzusammensetzung nach mindestens einem der vorangehenden Ansprüche, **dadurch gekennzeichnet, dass** das Flammschutzmittel aus der Gruppe umfassend Metallhydroxide, insbesondere in Form von Magnesium und/oder Aluminiumhydroxid, und Zinkborat ausgewählt ist und bevorzugt als Aluminiumhydroxid vorliegt.

10. Flammgeschützte Elastomerzusammensetzung nach mindestens einem der vorangehenden Ansprüche, **dadurch gekennzeichnet, dass** das Flammschutzmittel mit einem Anteil von 140 bis 250 phr in der Elastomerzusammensetzung enthalten ist.

11. Flammgeschützte Elastomerzusammensetzung nach mindestens einem der vorangehenden Ansprüche, **dadurch gekennzeichnet, dass** sie weiterhin mindestens ein Additiv und/oder Hilfsstoff ausgewählt aus der Gruppe umfassend Farbmittel, insbesondere in Form eines oder mehrerer Pigmente, Weichmacher, insbesondere auf Mineralölbasis, Alterungsschutzmittel, insbesondere zur Verbesserung der Hitzestabilität, und Vernetzungsbeschleuniger enthält.

12. Flammgeschützte Elastomerzusammensetzung nach mindestens einem der vorangehenden Ansprüche, **dadurch gekennzeichnet, dass** die polymeren Komponenten, insbesondere die gesamte Zusammensetzung, halogenfrei sind/ist.

13. Verfahren zur Herstellung eines Formkörpers, umfassend die Schritte
- Bereitstellen einer Zusammensetzung nach einem der Ansprüche 1 bis 12,
- Einbringen der Zusammensetzung in eine Form,
- Vulkanisieren der Zusammensetzung bei erhöhter Temperatur, vorzugsweise bei einer Temperatur im Bereich von 130°C bis 200 °C, und
- Entformen des so gebildeten Formkörpers.

14. Formkörper, erhältlich nach einem Verfahren gemäß Anspruch 13.

15. Verwendung einer flammgeschützte Elastomerzusammensetzung oder eines Formkörpers nach Anspruch 14 als Federelement, Dämpfungselement, Dichtung, Schlauch, Matte, Formteil, Schutzbekleidung, als Elastomerprofil, insbesondere für Fenster, etc. oder als Bestandteil hiervon.

## Claims

1. Flame-retardant elastomer composition comprising
- an elastomer containing double bonds, and
- a vinyl acetate-containing thermoplastic polymer
as polymeric components, wherein the polymeric components are present as a homogeneous polymer blend,
- a crosslinking system consisting of a sulfur or sulfur-containing crosslinking agent and a peroxide crosslinking agent, wherein the amount of the peroxide crosslinking agent is lower than that of the sulfur or sulfur-containing crosslinking agent, the peroxide crosslinking agent being present in an amount of 0.2 to 1.5 phr and the sulfur or sulfur-containing crosslinking agent being present in an amount of 1 to 7 phr in the polymer blend, and
- at least one flame retardant or a combination of flame retardants, wherein the flame retardant is present in an amount of 100 to 300 phr in the elastomer composition.

2. Flame-retardant elastomer composition according to claim 1, **characterized in that** the peroxide crosslinking agent is present in an amount of 0.5 to 1.2 phr in the polymer blend.

3. Flame-retardant elastomer composition according to claim 1 or 2, **characterized in that** the sulfur or sulfur-containing crosslinking agent is present in an amount of 2 to 5 phr and preferably 2.8 to 4.0 phr in the polymer blend.

4. Flame-retardant elastomer composition according to at least one of claims 1 to 3, **characterized in that** the elastomer containing double bonds is a homopolymer, copolymer or terpolymer of or with diene monomer units, in particular a terpolymer consisting of ethylene, propylene and a diene-containing termonomer, preferably with a termonomer content of at least 2 wt.% to 12 wt.% based on the terpolymer.

5. Flame-retardant elastomer composition according to at least one of the preceding claims, **characterized in that** the elastomer containing double bonds is a rubber having an unsaturated side group, in particular an ethylene-propylene-diene rubber (EPDM).

6. Flame-retardant elastomer composition according to at least one of the preceding claims, **characterized in that** the vinyl acetate-containing polymer is a homopolymer, copolymer or terpolymer of vinyl acetate, selected in particular from polyvinyl acetate (PVAc) or ethylene vinyl acetate (EVA).

7. Flame-retardant elastomer composition according to at least one of the preceding claims, **characterized in that** the polymeric components are present in a ratio of elastomer containing double bonds to vinyl acetate-containing thermoplastic polymer of 5:1 to 20:1.

8. Flame-retardant elastomer composition according to at least one of the preceding claims, **characterized in that** the peroxide crosslinking agent is present in the form of dialkyl peroxides or ketal peroxides.

9. Flame-retardant elastomer composition according to at least one of the preceding claims, **characterized in that** the flame retardant is selected from metal hydroxides and zinc borate.

10. Flame-retardant elastomer composition according to at least one of the preceding claims, **characterized in that** the flame retardant is present in an amount of 140 to 250 phr.

11. Flame-retardant elastomer composition according to at least one of the preceding claims, **characterized in that** it further contains at least one additive and/or auxiliary agent.

12. Flame-retardant elastomer composition according to at least one of the preceding claims, **characterized in that** the polymeric components are halogen-free.

13. Method for producing a molded body.

14. Molded body obtainable by the method according to claim 13.

15. Use of a flame-retardant elastomer composition or a molded body as a spring element, damping element, seal, hose, mat, molded part or elastomer profile.

## Revendications

1. Composition élastomère ignifugée comprenant
- un élastomère contenant des doubles liaisons, et
- un polymère thermoplastique contenant de l'acétate de vinyle comme composants polymères, les composants polymères étant présents sous forme de mélange polymère homogène,
- un système de réticulation constitué d'un agent de réticulation au soufre ou contenant du soufre et d'un agent de réticulation peroxydique, la quantité de l'agent de réticulation peroxydique étant inférieure à celle de l'agent de réticulation au soufre ou contenant du soufre, l'agent de réticulation peroxydique étant présent à raison de 0,2 à 1,5 phr et l'agent de réticulation au soufre ou contenant du soufre étant présent à raison de 1 à 7 phr dans le mélange polymère, et
- au moins un retardateur de flamme ou une combinaison de retardateurs de flamme, le retardateur de flamme étant présent à raison de 100 à 300 phr dans la composition élastomère.

2. Composition élastomère ignifugée selon la revendication 1, **caractérisée en ce que** l'agent de réticulation peroxydique est présent à raison de 0,5 à 1,2 phr dans le mélange polymère.

3. Composition élastomère ignifugée selon la revendication 1 ou 2, **caractérisée en ce que** l'agent de réticulation au soufre ou contenant du soufre est présent à raison de 2 à 5 phr et de préférence de 2,8 à 4,0 phr dans le mélange polymère.

4. Composition élastomère ignifugée selon au moins l'une des revendications 1 à 3, **caractérisée en ce que** l'élastomère contenant des doubles liaisons est un homopolymère, copolymère ou terpolymère de ou avec des unités monomères diènes.

5. Composition élastomère ignifugée selon au moins l'une des revendications précédentes, **caractérisée en ce que** l'élastomère contenant des doubles liaisons est un caoutchouc EPDM.

6. Composition élastomère ignifugée selon au moins l'une des revendications précédentes, **caractérisée en ce que** le polymère contenant de l'acétate de vinyle est sélectionné parmi l'acétate de polyvinyle ou l'éthylène-acétate de vinyle.

7. Composition élastomère ignifugée selon au moins l'une des revendications précédentes, **caractérisée en ce que** les composants polymères sont présents dans un rapport de 5:1 à 20:1.

8. Composition élastomère ignifugée selon au moins l'une des revendications précédentes, **caractérisée en ce que** l'agent de réticulation peroxydique est présent sous forme de peroxydes dialkyliques ou de peroxydes cétals.

9. Composition élastomère ignifugée selon au moins l'une des revendications précédentes, **caractérisée en ce que** le retardateur de flamme est sélectionné parmi les hydroxydes métalliques et le borate de zinc.

10. Composition élastomère ignifugée selon au moins l'une des revendications précédentes, **caractérisée en ce que** le retardateur de flamme est présent à raison de 140 à 250 phr.

11. Composition élastomère ignifugée selon au moins l'une des revendications précédentes, **caractérisée en ce qu'**elle contient en outre au moins un additif.

12. Composition élastomère ignifugée selon au moins l'une des revendications précédentes, **caractérisée en ce que** les composants polymères sont exempts d'halogènes.

13. Procédé de fabrication d'un corps moulé.

14. Corps moulé obtenu par le procédé selon la revendication 13.

15. Utilisation d'une composition élastomère ignifugée ou d'un corps moulé comme élément de ressort, d'amortissement ou de profil élastomère.
